(19) **Europäisches Patentamt**

**European Patent Office**

**Office européen des brevets**

(11) **EP 0 607 561 B1**

(12) **EUROPÄISCHE PATENTSCHRIFT**

(45) Veröffentlichungstag und Bekanntmachung des Hinweises auf die Patenterteilung:
**22.03.2000 Patentblatt 2000/12**

(51) Int. Cl.⁷: **H04N 7/08**, H04N 7/00

(21) Anmeldenummer: **93119949.1**

(22) Anmeldetag: **10.12.1993**

(54) **Empfänger zur Verarbeitung von nach dem Letterbox-Verfahren übertragenen Fernsehsignalen**

Receiver for processing TV signals which have been transmitted according to the letterbox method

Récepteur pour traiter des signaux de télévision transmis selon la méthode letterbox

(84) Benannte Vertragsstaaten:
**AT CH DE ES FR GB IT LI**

(30) Priorität: **23.12.1992 DE 4243804**

(43) Veröffentlichungstag der Anmeldung:
**27.07.1994 Patentblatt 1994/30**

(73) Patentinhaber:
**GRUNDIG Aktiengesellschaft**
**90762 Fürth (DE)**

(72) Erfinder:
• **Silverberg, Michael, Dr.,**
**Grundig E.M.V.**
**D-90748 Fürth (DE)**
• **Stracke, Jürgen,**
**Grundig E.M.V.**
**D-90748 Fürth (DE)**

(56) Entgegenhaltungen:
**WO-A-92/06565**

• **INTERNATIONAL BROADCASTING CONVENTION, IBC 92, 3-7 JULY 1992, AMSTERDAM, NL Seiten 160 - 164 SCHEPERS AND AL. 'PALPLUS IN THE HOME'**
• **FERNSEH- UND KINO-TECHNIK, 44. JAHRGANG, Nr.11, 1990 Seiten 595 - 602 KAYS 'EIN VERFAHREN ZUR VERBESSERTEN PAL-CODIERUNG UND -DECODIERUNG'**

**Beschreibung**

Die Erfindung betrifft einen Empfänger zur Verarbeitung von nach dem Letterbox-Verfahren übertragenen Fernsehsignalen mit den im Oberbegriff des Anspruchs 1 angegebenen Merkmalen.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind. Verbesserte kompatible Fernsehsysteme haben den Vorteil, daß die heute auf dem Markt befindlichen Empfänger auch weiterhin verwendbar sind.

Ein derartiges verbessertes kompatibles Fernsehsystem ist unter der Bezeichnung PALplus bekannt geworden und ist beispielsweise in den folgenden Literaturstellen beschrieben:

- Zeitschrift Fernseh- und Kino-Technik, 45 Jg., Nr. 8/1991, S. 391-397;

- Zeitschrift Funkschau 18/1991, S. 66-71;

- Tagungsband Nr. 358 der International Broadcasting Convention, Amsterdam, July 1992, S. 203-207;

- Tagungsband Nr. 358 der International Broadcasting Convention, Amsterdam, July 1992, S. 160-164.

Beim PALplus-Fernsehsystem wird im Fernsehstudio, ausgehend von einem Zeilensprungsignal mit einem Seitenverhältnis von 16 : 9, einer Vertikalfrequenz von 50 Hz und einer Zeilenzahl von 625 pro Vollbild, ein zusammengesetztes PAL-Farbvideosignal erzeugt. Dazu wird das genannte 16 : 9 Zeilensprungsignal einer vertikalen Bandaufspaltung unterworfen, wobei die 576 aktiven Zeilen in einen vertikal niederfrequenten Bildteil, der in 432 Zeilen in die Bildmitte gelegt wird, und einen vertikal höherfrequenten Bildteil aufgeteilt, der mit reduzierter Amplitude in jeweils 72 Zeilen am oberen und unteren Bildrand im Bereich des Schwarzwertes farbträgerfrequent übertragen wird.

Dieses zusammengesetzte PAL-Farbvideosignal kann über eine herkömmliche PAL-Übertragungsstrecke übertragen und auf jedem herkömmlichen Fernsehempfänger mit einem 4 : 3-Bildschirm dargestellt werden, wobei am oberen und am unteren Bildrand dunkle Streifen auftreten.

In diesen dunklen Streifen sind jedoch zusätzliche Informationen enthalten, die im PALplus-Decoder eines verbesserten Fernsehempfängers mit einem 16 : 9-Bildschirm zusammen mit den im mittleren Teil des Bildes übertragenen Informationen zum Erhalt eines bildschirmfüllenden 16 : 9-Bildes mit verbesserter vertikaler Auflösung und verbesserter Luminanz-/Chrominanz-Trennung ausgewertet werden können.

Die Art und Weise der Luminanz-/Chrominanz-Trennung ist davon abhängig, ob das im Studio verwendete Bildquellenmaterial durch Abtastung eines Kinofilms erhalten oder mittels einer Videokamera erzeugt wurde. Wurde das im Studio verwendete Bildquellenmaterial durch Abtastung eines Kinofilms erhalten, dann weisen die beiden Halbbilder eines Vollbildes dieselbe Bewegungsphase auf und die Luminanz-/Chrominanz-Trennung erfolgt nach dem sog. "Color-Plus"-Verfahren, welches in der Zeitschrift Fernseh- und Kino-Technik, 44 Jg., Nr. 11/1990, S. 595 - 602, ausführlich beschrieben ist. Dieses Verfahren beruht darauf, daß zwei örtlich benachbarte Zeilen aufeinanderfolgender Halbbilder eine sich um 180° unterscheidende Farbhilfsträgerphase aufweisen. Dies ermöglicht eine Luminanz-/Chrominanz-Trennung durch einen einfachen Additions- oder Subtraktionsvorgang. Wurde das im Studio verwendete Bildquellenmaterial hingegen mittels einer Videokamera erzeugt, so erfolgt eine Luminanz-/Chrominanz-Trennung in herkömmlicher Weise.

Um dem Empfänger die Auswahl des jeweils geeigneten Verfahrens zur Trennung von Luminanz und Chrominanz zu ermöglichen, wird im Sender eine die Bildsignalquelle kennzeichnende Kenninformation erzeugt und in eine nicht am Bildschirm sichtbare Zeile des Fernsehsignals eingesetzt. Die Auswahl des jeweils geeigneten Verfahrens zur Trennung von Luminanz und Chrominanz wird aus dieser Kenninformation und aus der von einem Bewegungsdetektor abgeleiteten Information durchgeführt, der - wenn die Bildquelle eine Kamera war - einen Vergleich eines Bildpunktes bezüglich der Farbdifferenzsignale mit dem entsprechenden Bildpunkt des vorangegangenen Vollbildes durchführt.

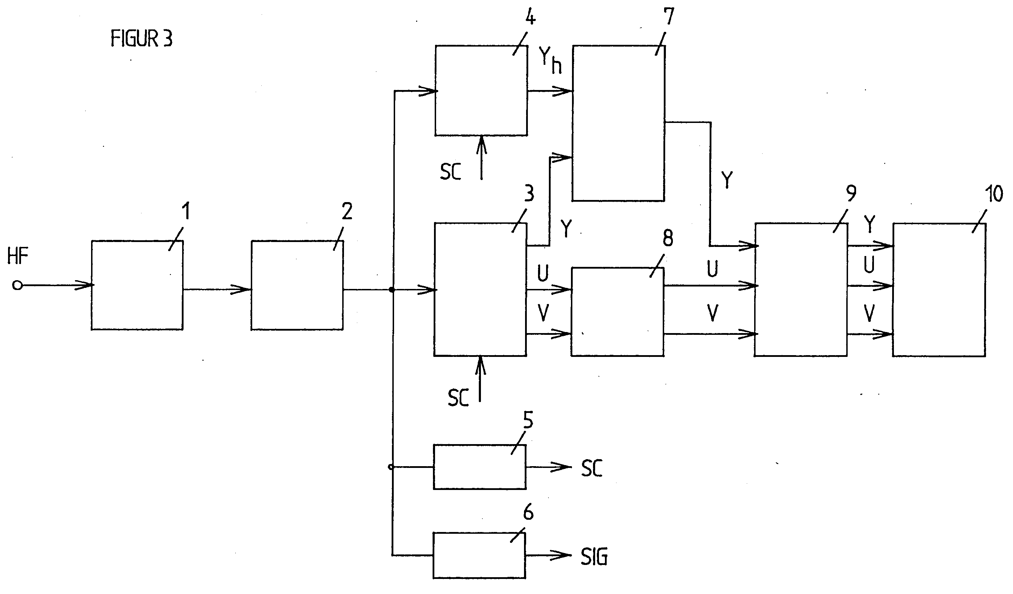

Die Struktur eines bekannten PALplus-Empfängers, bei welchem eine Bildschirmdarstellung mit 100 Hz Vertikalfrequenz erfolgt, ist in der bereits oben genannten Literaturstelle Tagungsband Nr. 358 der International Broadcasting Convention, Amsterdam, July 1992, S. 160-164, beschrieben. Diese bekannte Struktur wird nachstehend anhand der Figur 3 näher erläutert

Diese zeigt einen PALplus-Empfänger TV mit einem HF-Eingang HF, einem Tuner 1, einer Zwischenfrequenzstufe 2, einer Schaltung 3 zur PAL-Demodulation und zur adaptiven Luminanz-/Chrominanz-Trennung, einer Schaltung 4 zur Demodulation der farbträgerfrequent übertragenen Randzeileninformationen, eine Schaltung 5 zur Taktregenerierung, eine Schaltung 6 zur Decodierung der Kenninformation für die Art der Signalquelle, eine Schaltung 7 zur Wiederherstellung der vollen Vertikalauflösung, eine Schaltung 8 zur vertikalen Aufwärtskonversion der Farbdifferenzsignale, eine Schaltung 9 zur Erhöhung der Vertikalfrequenz von 50 auf 100 Hz und einen 16 : 9-Bildschirm 10 zur Wiedergabe der Signale.

In der Schaltung 3 wird zunächst aus den am Ausgang der Zwischenfrequenzstufe vorliegenden FBAS-Signalen eine PAL-Demodulation durchgeführt, wobei parallel vorliegende Komponentensignale Y/U/V erzeugt werden, welche ein Abtastverhältnis von 4 : 1 : 1 aufweisen. Danach folgt eine bewegungsadaptive Color-Plus-Decodierung. Dazu wird jeweils ein Halbbildspeicher für die Luminanz- und die Chrominanzkomponente benötigt. Der Speicherplatzbedarf S für die Abspeicherung eines Halbbildes des Luminanz- bzw. Farbdifferenzsignals kann aus der aktiven Zeilenzahl pro Halbbild, der Zahl der aktiven Bildpunkte pro Zeile, der Anzahl der Bits pro Abtastwert und dem oben angegebenen Abtastverhältnis von 4 : 1 : 1 wie folgt berechnet werden:

$$S(Y) = 288 \times 720 \times 8 = 1,658\ 880\ \text{Mbit}$$

$$S(U) = S(V) = 0.25 \times S(Y) = 0,414\ 620\ \text{Mbit}$$

$$S(U) + S(V) = 0,829\ 440\ \text{Mbit}.$$

Berücksichtigt man darüber hinaus, daß der für die Farbdifferenzsignale benötigte Speicherplatz aufgrund der Tatsache, daß in den Randzeilen keine Farbinformation übertragen wird, noch um 25 % je Farbdifferenzsignal geringer ist als vorstehend angegeben, dann ergibt sich:

$$S(U) = S(V) = 0.75 \times 0,414\ 620 = 0,310\ 965\ \text{Mbit}$$

$$S(U) + S(V) = 0,62193\ \text{Mbit}$$

Bei der praktischen Umsetzung wird üblicherweise für das Luminanzsignal ein 2 Mbit-Speicher und für die Farbdifferenzsignale ein 1 Mbit-Speicher verwendet. Da die Color-Plus-Decodierung im Kameramodus bewegungsadaptiv erfolgt, ist weiterhin ein Vollbildspeicher im Weg der Farbdifferenzsignale notwendig, d.h. ein weiterer 1 Mbit-Speicher. Ergebnis der Color-Plus-Decodierung sind übersprechfreie Y/U/V-Signale erhöhter Bandbreite.

Aus dem genannten Luminanzsignal, welches dem Luminanzanteil des in den mittleren 432 Zeilen des Bildes übertragenen Signals entspricht, und dem demodulierten Zusatzsignal vom Ausgang der Schaltung 4 wird in der Schaltung 7 wieder ein 576-zeiliges Luminanzsignal generiert. Aus den genannten Farbdifferenzsignalen U und V wird in der Schaltung 8 mittels eines einfachen vertikalen Interpolationsvorganges ebenfalls wieder ein 576-zeiliges Signal erzeugt. Für diese vertikale Aufwärtskonversion des Luminanzsignals und der Farbdifferenzsignale wird jeweils ein Vollbildspeicher benötigt. Aufgrund der genannten Abtastverhältnisse sind folglich 4 Mbit Speicherplatz für das Luminanzsignal und 2 Mbit Speicherplatz für die Farbdifferenzsignale notwendig. Aus der obigen Berechnung des Speicherplatzbedarfes ist ersichtlich, daß für diese vertikale Aufwärtskonversion des Luminanzsignals 3,31776 Mbit und für die vertikale Aufwärtskonversion der Farbdifferenzsignale 1,65888 Mbit Speicherplatz notwendig sind. Bei der praktischen Umsetzung dieser vertikalen Aufwärtskonversion werden ein 4 Mbit-Speicher bzw. ein 2 Mbit-Speicher verwendet.

Danach erfolgt in der Schaltung 9 eine zeitliche Aufwärtskonversion, d.h. eine Erhöhung der Vertikalfrequenz von 50 Hz auf 100 Hz. Unter der Voraussetzung, daß am Bildschirm 10 eine 100 Hz-Wiedergabe im sog. ABAB-Mode erfolgen soll, wird in der Schaltung 9 ebenfalls ein Vollbildspeicher für die Luminanzkomponente und ein Vollbildspeicher für die Farbdifferenzsignale benötigt. Demnach ist auch für die zeitliche Aufwärtskonversion 3,31776 Mbit Speicherplatz für das Luminanzsignal und 1,65888 Mbit Speicherplatz für die Farbdifferenzsignale notwendig. Auch hier wird bei der praktischen Umsetzung ein 4 Mbit-Speicher für das Luminanzsignal und ein 2 Mbit-Speicher für die Farbdifferenzsignale verwendet.

Demnach werden beim bekannten PALplus-Empfänger Speicher verwendet von insgesamt 16 MBit.

Die Aufgabe der Erfindung besteht darin, einen Empfänger zur Verarbeitung von nach dem Letterbox-Verfahren übertragenen Fernsehsignalen mit den im Oberbegriff des Anspruchs 1 angegebenen Merkmalen anzugeben, dessen Speicherbedarf verringert ist.

Diese Aufgabe wird bei einem Empfänger mit den im Oberbegriff des Anspruchs 1 angegebenen Merkmalen durch die im kennzeichnenden Teil des Anspruchs 1 angegebenen Merkmale gelöst.

Vorteilhafte Weiterbildungen ergeben sich aus den abhängigen Patentansprüchen.

Im folgenden wird die Erfindung anhand der Figuren beispielhaft erläutert. Es zeigt

Figur 1 ein Blockschaltbild zur Erläuterung eines PALplus-Empfängers nach der Erfindung,

Figur 2 ein Zeitdiagramm zur Erläuterung der zeitlichen Zusammenhänge zwischen den Einschreib- und Auslesevorgängen in bzw. aus den Speichern 22 und 23 von Fig. 1,

Figur 3 ein Blockschaltbild zur Erläuterung eines bekannten PALplus-Empfängers.

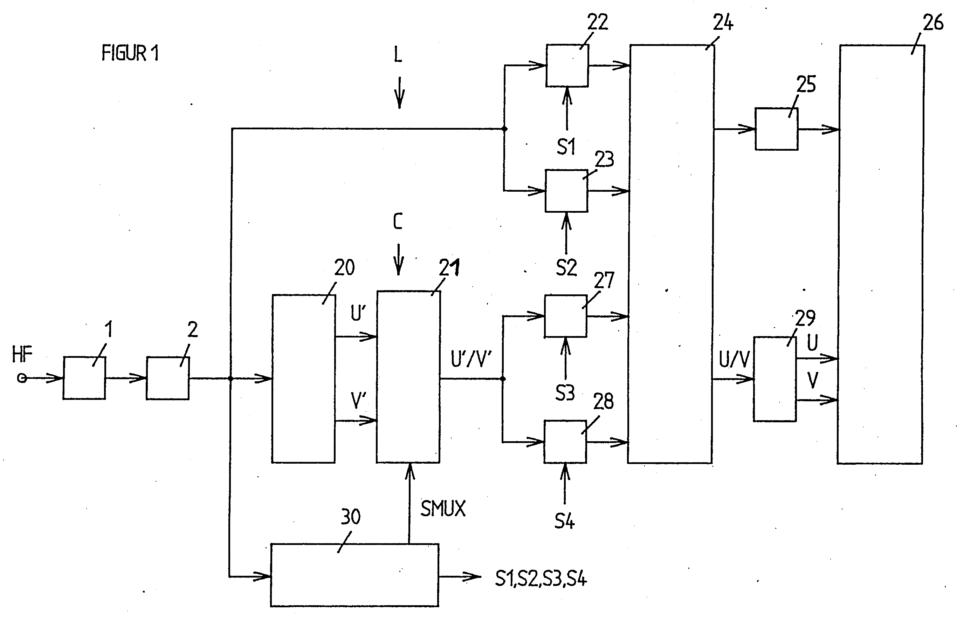

Die Figur 1 zeigt einen PALplus-Empfänger mit einem HF-Eingang HF, an welchem über eine herkömmliche PAL-Übertragungsstrecke übertragene hochfrequente PALplus-Signale anliegen, deren grundsätzliche Zusammensetzung aus den eingangs genannten Literaturstellen bekannt ist. Vom HF-Eingang werden die Signale über einen Tuner 1 und eine Zwischenfrequenzschaltung 2 geführt, welche, abgesehen von einem breitbandigeren ZF-Filter, in herkömmlicher Weise aufgebaut sind. Am Ausgang der Zwischenfrequenzschaltung 2 steht ein FBAS-Signal zur Verfügung.

Dieses wird im Chrominanzkanal C des Fernsehempfängers einem herkömmlichen PAL-Decoder 20 zugeführt, an dessen Ausgang ein Farbdifferenzsignal U' und ein Farbdifferenzsignal V' parallel zur Verfügung stehen. Diese Signale U' und V' sind noch mit Übersprechkomponenten behaftet, da mittels des herkömmlichen PAL-Decoders 20 keine übersprechfreie Trennung von Luminanzsignal und Farbdifferenzsignalen möglich ist.

Um bei der Verarbeitung der Farbdifferenzsignale Hardwareaufwand einzusparen, werden die am Ausgang des PAL-Decoders 20 bereitgestellten Signale U' und V' in einem Multiplexer 21 pixelweise zu einem einkanaligen Signal U'/V' zusammengefaßt.

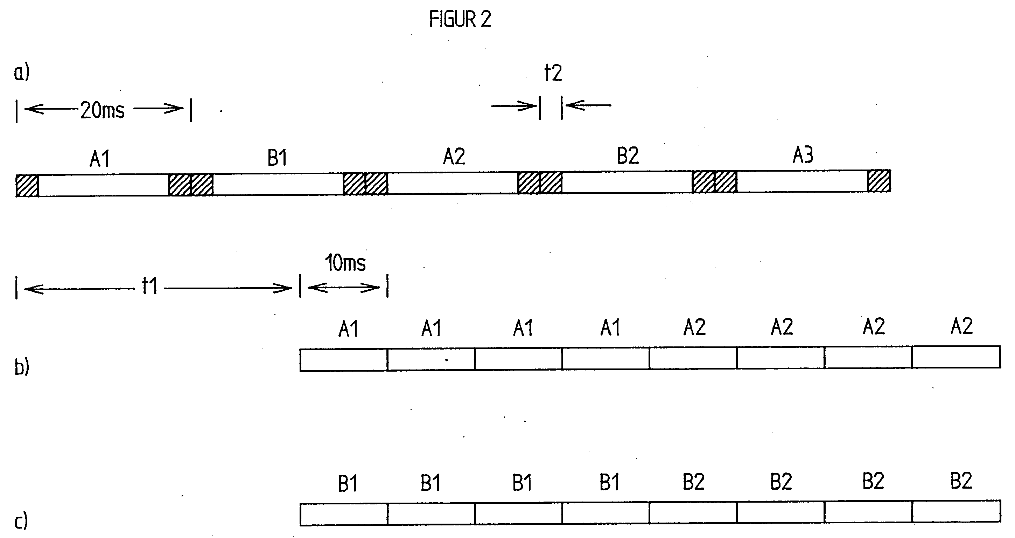

Das FBAS-Ausgangssignal der Zwischenfrequenzschaltung 2 wird weiterhin dem Luminanzkanal L des Fernsehempfängers zugeführt. Dort werden die aufeinanderfolgenden Halbbilder A1, B1, A2, B2, usw. des FBAS-Signals Speichereinheiten 22 und 23 zugeführt, wobei die ungeradzahligen Halbbilder A1, A2, A3 usw. der Speichereinheit 22 und die geradzahligen Halbbilder B1, B2, B3, usw. der Speichereinheit 23 zugeordnet werden. Da - wie noch im Zusammenhang mit der Figur 2 erläutert wird - zwischen dem Beginn des Einlesevorgangs und dem Beginn des Auslesevorgangs eine Mindestverzögerung notwendig ist, handelt es sich beim Speicher 22 um einen 4 Mbit-Speicher und beim Speicher 23 um einen 2 Mbit-Speicher.

Die Figur 2 zeigt ein Zeitdiagramm zur Erläuterung der zeitlichen Zusammenhänge zwischen den Einschreib- und den Auslesevorgängen aus den Speichern 22 und 23 von Figur 1.

Die Figur 2a zeigt die aufeinanderfolgenden Halbbilder A1, B1, A2, B2, A3, ... des FBAS-Signals. Die ungeradzahligen Halbbilder A1, A2, A3, usw., werden im Speicher 22 abgespeichert, welcher derart dimensioniert ist, daß er den Inhalt der aktiven Zeilen zweier FBAS-Halbbilder aufnehmen kann. Die geradzahligen Halbbilder B1, B2, B3, usw., werden im Speicher 23 abgespeichert, welcher derart dimensioniert ist, daß er etwas mehr als den Inhalt der aktiven Zeilen eines FBAS-Halbbildes aufnehmen kann. Die schraffierten Bereiche in Figur 2a entsprechen den Randzeilenbereichen, d.h. in jedem Halbbild den oberen bzw. unteren 36 Zeilen.

Aus Figur 2b sind die Zeitintervalle ersichtlich, während derer die ungeradzahligen Halbbilder A1, A2, usw. mit doppelter Auslesefrequenz jeweils viermal nacheinander aus dem Speicher 22 ausgelesen werden.

Aus Figur 2c sind die Zeitintervalle ersichtlich, während derer die geradzahligen Halbbilder B1, B2, usw. ebenfalls mit doppelter Auslesefrequenz jeweils viermal nacheinander aus dem Speicher 23 ausgelesen werden.

In den Ausgangssignalen der Speicher 22 und 23 ist die für die Arithmetik 25 zur vertikalen Aufwärtskonversion notwendige Zeilenumsortierung bereits berücksichtigt.

Wie aus Figuren 2a und 2b hervorgeht, ist zwischen dem Beginn des Einlesens jedes ungeradzahligen Halbbildes und dem Beginn des ersten Auslesens desselben Halbbildes eine Mindestverzögerung t1 vorgesehen.

Durch diese Mindestverzögerung wird sichergestellt, daß die einzelnen Zeilen der Halbbilder am Ausgang der Speicher 22 und 23 für die spätere, im Rahmen der vertikalen Aufwärtskonversion notwendige Arithmetik 25 in der richtigen zeitlichen Reihenfolge zur Verfügung stehen, was zur Folge hat, daß in der Schaltung 25 - abgesehen von wenigen Zeilenspeichern - kein weiterer Speicherplatz benötigt wird. Der Aufbau der Arithmetik 25 selbst ist zum Veständnis der Erfindung nicht notwendig und wird deshalb hier nicht näher beschrieben. In diesem Zusammenhang wird jedoch auf die Zeitschrift Rundfunktechnische Mitteilungen, Jg. 35 (1991) H. 1, S. 29-35, und die Zeitschrift Fernseh- und Kino-Technik, 46. Jg., Nr. 10/1992, s. 673-679, hingewiesen.

Weiterhin wird durch die genannte Mindestverzögerung sichergestellt, daß die aufeinanderfolgenden Halbbilder am Ausgang der jeweiligen Speicher zeitgleich zur Verfügung gestellt werden können, was zur Folge hat, daß in der Arithmetik 24 zur Color-Plus-Decodierung - abgesehen von wenigen Zeilenspeichern - kein weiterer Speicherplatz benötigt wird. Die parallele Verfügbarkeit aufeinanderfolgender Halbbilder ist Voraussetzung für die Durchführung des Color-Plus-Algorithmus zur Trennung der Luminanz- und der Chrominanzkomponente, welcher lediglich auf einer Addition entsprechender Komponenten aus aufeinanderfolgenden Halbbildern beruht. Da auch der Aufbau dieser Arithmetik zum Verständnis der Erfindung nicht notwendig ist, wird auch er hier nicht näher beschrieben. Es wird jedoch auf die bereits oben genannte Zeitschrift Fernseh- und Kino-Technik, 44 Jg., Nr. 11/1990, S. 595-602, hingewiesen.

Damit ist zur Durchführung der drei Signalverarbeitungsverfahren bzw. -schritte

- Erhöhung der Vertikalfrequenz von 50 Hz auf 100 Hz,

- Color-Plus-Decodierung zur Luminanz-/Chrominanz-Tennung, und

- Zeilenumsortierung zur vertikalen Aufwärtsinterpolation des Luminanzsignals von 432 auf 576 aktive Zeilen

nur 1 Speicherblock mit den Speichern 22, 23, 27 und 28 notwendig. Die bei der Color-Plus-Decodierung und der vertikalen Aufwärtskonversion des Luminanzsignals erforderlichen arithmetischen Operationen können hinter dem genannten Speicherblock in der 100 Hz-Ebene erfolgen. Dies hat den Vorteil, daß beide arithmetischen Operationen 24 und 25 auf einem einzigen Chip zusammengefaßt werden können.

Es wird noch darauf hingewiesen, daß die Speicherkapazität des Speichers 23 - wie oben bereits angegeben - etwas größer sein muß (um mindestens 36 Zeilen) als die zur Aufnahme eines Halbbildes notwendige Speicherkapazität, da ansonsten die im Zeitintervall t2 von Figur 2a vorliegenden Daten des Halbbildes B2 in unerwünschter Weise die bereits abgespeicherten Daten des Halbbildes B1 teilweise überschreiben würden.

Die Verarbeitung des einkanaligen Signals U'/V' am Ausgang des Multiplexers 21 erfolgt ähnlich wie die des FBAS-Signals im Luminanzkanal. Die aufeinanderfolgenden Halbbilder werden Speichereinheiten 27 und 28 zugeführt, wobei die ungeradzahligen Halbbilder dem Speicher 27 und die geradzahligen Halbbilder dem Speicher 28 zugeordnet werden. Die Einschreib- und Auslesezeitintervalle entspechen den in Figur 2 gezeigten. Im Unterschied zur Kapazität der Speicher 22 und 23 beträgt die Speicherkapazität der Speicher 27 und 28 2 Mbit bzw. 1 Mbit. Die Ausgangssignale der Speicher 27 und 28 werden der Arithmetik 24 zur Color-Plus-Decodierung zugeführt und dort von Luminanzresten befreit. Die am Ausgang der Arithmetik 24 vorliegenden übersprechfreien U/V-Signale werden in einer Schaltung 29 einer vertikalen Aufwärtskonversion mittels Interpolation unterworfen und in parallel vorliegende Farbdifferenzsignale U und V umgewandelt und gemeinsam mit dem am Ausgang der Arithmetik 25 zur vertikalen Aufwärtsinterpolation vorliegenden, ebenfalls übersprechfreien Luminanzsignal Y einem 16 : 9-Bildschirm 26 zugeführt. Dort kann das Signal mit einer Halbbildfrequenz von 100 Hz entweder im sog. AABB-Modus oder im ABAB-Modus dargestellt werden, je nachdem, ob es sich beim Bildquellenmaterial um eine Filmabtastung oder eine Kameraaufnahme handelt.

Die Steuerung des Multiplexers 21 und der Einschreib- und Auslesevorgänge in bzw. aus den Speichern 22, 23, 27 und 28 erfolgt durch einen Mikrocomputer 30, welcher u.a. aus dem FBAS-Ausgangssignal der Zwischenfrequenzschaltung 2 die im Sender eingesetzten Kennsignale auswertet.

Berücksichtigt man, daß bei der Color-Plus-Decodierung im Kameramode ein weiterer nicht gezeichneter Vollbildspeicher für die Farbdifferenzsignale zum Zwecke einer Bewegungsdetektion benötigt wird, ist ersichtlich, daß beim beanspruchten Empfänger insgesamt lediglich ein Speicherplatzbedarf von ca. 10 Mbit besteht.

## Patentansprüche

1. Empfänger zur Verarbeitung von nach dem Letterbox-Verfahren übertragenen Fernsehsignalen, mit

- einer Schaltung (22, 23, 24, 27, 28) zur Trennung des Luminanzsignals von den Farbdifferenzsignalen nach dem Color-Plus-Verfahren,

- einer Schaltung (22, 23, 25) zur vertikalen Aufwärtskonversion des Luminanzsignals,

- einer Schaltung (22, 23, 27, 28) zur Erhöhung der Bildwiedergabefrequenz,

- einem Mikrocomputer (30) zur Steuerung der genannten Schaltungen, und

- einem Bildschirm (26),
  **dadurch gekennzeichnet,** daß

- er den genannten Schaltungen gemeinsam zugeordnete Speichermittel (22, 23, 27, 28) aufweist, und

- die zur vertikalen Aufwärtskonversion des Luminanzsignals und zur Trennung des Luminanzsignals von den Farbdifferenzsignalen notwendigen Arithmetiken (24, 25) zwischen den Ausgängen der gemeinsamen Speichermittel (22, 23, 27, 28) und dem Bildschirm (26) angeordnet sind.

2. Empfänger nach Anspruch 1,
   **dadurch gekennzeichnet,** daß

- er einen Luminanzkanal (L) und einen Chrominanzkanal (C) aufweist,

- in jedem der beiden Kanäle (L, C) parallel angeordnete Speicher (22, 23 bzw. 27, 28) vorgesehen sind,

- ungeradzahlige und geradzahlige Halbbilder des empfangenen Signals jeweils demselben Speicher zugeordnet werden, und

- in jedem der beiden Kanäle (L, C) an den Ausgängen der parallel angeordneten Speicher Signale aus aufeinanderfolgenden Halbbildern viermal nacheinander zeitkomprimiert und zeitgleich zur Verfügung stehen, wobei die für die vertikale Aufwärtskonversion notwendige Zeilenumsortierung bereits durchgeführt wurde.

3. Empfänger nach Anspruch 1 oder 2,
   **dadurch gekennzeichnet,** daß die zur vertikalen Aufwärtskonversion des Luminanzsignals und zur Trennung des Luminanzsignals von den Farbdifferenzsignalen notwendigen Arithmetiken (24, 25) in Form eines einzigen Chips realisiert sind.

## Claims

1. Receiver for processing television signals transmitted by the letterbox method, comprising

   - a circuit (22, 23, 24, 27, 28) for separating the luminance signal from the colour difference signals by the Colour Plus method,

   - a circuit (22, 23, 25) for the vertical up-conversion of the luminance signal,

   - a circuit (22, 23, 27, 28) for increasing the picture reproduction frequency,

   - a microcomputer (30) for controlling said circuits, and

   - a viewing screen (26),
     characterized in that

   - it has memory means (22, 23, 27, 28) jointly assigned to said circuits, and

   - the arithmetic units (24, 25) necessary for the vertical up-conversion of the luminance signal and for separating the luminance signal from the colour difference signals are disposed between the outputs of the common memory means (22, 23, 27, 28) and the viewing screen (26).

2. Receiver according to Claim 1, characterized in that

   - it has a luminance channel (L) and a chrominance channel (C),

   - memories (22, 23 and 27, 28, respectively) disposed in parallel are provided in each of the two channels (L, C),

   - odd and even fields of the received signals are each assigned to the same memory, and

   - signals from consecutive fields time-compressed four times in succession and in sync are available at the outputs of the memories disposed in parallel in each of the two channels (L, C), the line rearrangement necessary for the vertical up-conversion already having been carried out.

3. Receiver according to Claim 1 or 2, characterized in that the arithmetic units (24, 25) necessary for the vertical up-conversion of the luminance signal and for eparating the luminance signal from the colour difference signals are implemented in the form of a single chip.

## Revendications

1. Récepteur pour le traitement de signaux de télévision transmis selon le procédé Letterbox, comportant

   - un circuit (22,23,24,27,28) pour séparer le signal de luminance des signaux de différence de couleurs conformément au procédé ColorPlus,
   - un circuit (22,23,25) pour réaliser la conversion croissante verticale du signal de luminance,
   - un circuit (22,23,27,28) pour accroître la fréquence de reproduction d'images,
   - un micro-ordinateur (30) pour commander lesdits circuits, et
   - un écran (26),
     caractérisé en ce que
   - il comporte des moyens de mémoire (22,23,27,28) associés en commun auxdits circuits, et
   - les unités arithmétiques (24,25), qui sont nécessaires pour la conversion croissante verticale du signal de luminance et pour la séparation du signal de luminance des signaux de différence de couleurs sont disposées entre les sorties des moyens de mémoire communs (22,23,27,28) et l'écran (26).

2. Récepteur selon la revendication 1,
   caractérisé en ce que

   - il comporte un canal de luminance (L) et un canal de chrominance (C),
   - il est prévu des mémoires (22,23 ou 27,28) disposées parallèlement dans chacun des deux canaux (L,C),
   - des trames impaires et paires du signal reçu sont associées respectivement à la même mémoire, et
   - dans chacun des deux canaux (L,C) au niveau des sorties des mémoires disposées en parallèle, des signaux provenant des trames successives sont comprimés successivement quatre fois dans le temps et sont disponibles simultanément, le réarrangement des lignes nécessaires pour la conversion croissante verticale ayant déjà été exécuté.

3. Récepteur selon la revendication 1 ou 2,
   caractérisé en ce que
   les unités arithmétiques (24,25) nécessaires pour la conversion croissante verticale du signal de luminance et pour la séparation du signal de luminance des signaux de différence de couleurs sont réalisées sous la forme d'une seule puce.

FIGUR 1

FIGUR 2

a)

t2

|←— 20ms —→|

A1    B1    A2    B2    A3

b)

t1    10ms

A1  A1  A1  A1  A2  A2  A2  A2

c)

B1  B1  B1  B1  B2  B2  B2  B2

EP 0 607 561 B1

FIGUR 3